# FASCICULE DE BREVET EUROPEEN

(11) **EP 3 558 625 B1**
(45) Date de publication et mention de la délivrance du brevet: **16.03.2022**
(21) Numéro de dépôt: 17837976.4
(22) Date de dépôt: 22.12.2017
(51) Int. Cl.: B29B 7/60, B29B 7/74, B29C 48/025, B29C 48/07, B29C 48/12, B29C 48/16, B29C 48/21, B29C 48/25, B29C 48/30, B29C 48/49

(54) **INSTALLATION D'EXTRUSION COMPORTANT UNE TETE D'EXTRUSION PERFECTIONNEE**
EXTRUSIONSANLAGE MIT EINEM VERBESSERTEN EXTRUSIONSKOPF
EXTRUSION FACILITY COMPRISING AN IMPROVED EXTRUSION HEAD

(30) Priorité: 22.12.2016 FR 1663254
(43) Date de publication de la demande: 30.10.2019
(73) Titulaire: Compagnie Générale des Etablissements Michelin, 63000 Clermont-Ferrand (FR)
(72) Inventeur: OUGIER, Christophe, 63040 Clermont-Ferrand Cedex 9 (FR); LETOCART, Arnaud, 63040 Clermont-Ferrand Cedex 9 (FR)
(74) Mandataire: Redouté, Gilles Pierre
(86) Numéro de dépôt international: PCT/FR2017/053833
(87) Numéro de publication internationale: WO 2018/115796

(56) Documents cités:
- EP-A1- 0 246 142
- DE-A1- 3 010 691
- DE-A1- 4 304 174
- JP-A- S5 214 679
- JP-A- S5 458 762
- JP-A- 2000 117 813
- JP-A- 2005 254 464
- US-A- 4 137 027

## Description

L'invention concerne le domaine de l'extrusion des mélanges d'élastomères destinés à la fabrication des pneumatiques. Plus particulièrement, elle concerne la fabrication de profilés complexes coextrudés à base de mélanges d'élastomères de compositions différentes.

De manière connue, la fabrication des profilés complexes par extrusion d'au moins deux mélanges d'élastomères de compositions différentes, ou coextrusion, utilise plusieurs extrudeuses reliées à une tête d'extrusion commune. Chaque extrudeuse est formée d'un corps cylindrique ou fourreau fixe à l'intérieur duquel se trouve une vis coaxiale à l'axe longitudinal du fourreau et qui est entraînée en rotation autour de celui-ci. Elle a pour fonction d'homogénéiser un mélange caoutchouteux qui y est introduit et de le pousser vers une filière de sortie. Pour un produit complexe, la filière de sortie reçoit plusieurs mélanges d'élastomères de compositions différentes et détermine le profil de la bande de caoutchouc. Ce profil est défini par une lame profilée fixe coopérant avec un rouleau rotatif ou avec une paroi fixe.

De nos jours, on fait de plus en plus appel à l'utilisation de produits complexes pour diminuer le nombre de poses successives de produits en assemblage, diminuer les coûts et améliorer la qualité du produit final. On préfère obtenir ces produits complexes par coextrusion car ce procédé assure une meilleure cohésion des différents composants entre eux. Or, le nombre de composants qui forment un profilé complexe a tendance à augmenter, ce qui complique la réalisation de l'outillage de production et le rend plus encombrant.

On connait ainsi le document WO 2015/028166 qui décrit une installation de coextrusion utilisant cinq extrudeuses agencées en parallèle et servant à la fabrication d'une bande de roulement pour pneumatique. On obtient ainsi un profilé complexe par coextrusion de différents mélanges arrivant, via cinq couloirs différents, dans une tête d'extrusion commune munie en sortie d'un dispositif de profilage. Les extrudeuses sont toutes agencées du côté opposé à celui de sortie du produit. Lorsque l'on veut changer le profil du complexe extrudé, on remplace la partie aval comportant la filière de profilage de la tête d'extrusion qui est, elle, fixe. Ainsi, l'outillage amont comportant les couloirs d'arrivée des mélanges est fixé aux extrudeuses et ne peut être remplacé que par des opérations longues de démontage. Par ailleurs, de par la convergence des flux de mélanges d'un seul côté, l'encombrement de la tête d'extrusion est très important et l'installation doit comporter des mécanismes de verrouillage de la tête d'extrusion très robustes pour contrer la pression d'extrusion.

Une solution à ce problème est décrite dans le document JP 4053687 qui propose de disposer les différentes extrudeuses de part et d'autre de la filière de sortie du produit complexe coextrudé. L'ensemble de coextrusion selon ce document comprend une tête d'extrusion fixe munie d'une filière de sortie en partie centrale inférieure et de trois extrudeuses montées fixes deux à droite et une à gauche de la filière. Selon ce document, on peut changer de type de profilé en remplaçant la filière par une autre qui communique avec les trois extrudeuses ainsi qu'avec une quatrième extrudeuse amovible placée en dessous. Les efforts encaissés par la tête d'extrusion sont certes moindres que dans le document précédent de par l'agencement différent des extrudeuses. Toutefois, la tête d'extrusion de ce document comprend des canaux de préformage très profonds qui relient les extrudeuses à la filière et qui sont difficiles à nettoyer. De ce fait, l'ensemble d'extrusion de ce document produit beaucoup de chutes lors du changement des mélanges des différentes extrudeuses.

On connaît également du document US 7 311 505 une autre installation d'extrusion comprenant une tête d'extrusion fixe munie d'une filière de sortie en partie centrale inférieure et de quatre extrudeuses montées fixes deux à droite et deux à gauche de la filière. La tête d'extrusion comprend par ailleurs trois parties mobiles qui sont amenées à se déplacer en fin d'opération pour ouvrir la tête et permettre d'accéder aux canaux profonds qui relient les extrudeuses à la filière d'extrusion. Etant plus judicieusement réalisée que celle du document précédent, la structure de la tête d'extrusion de ce document s'avère assez complexe et doit faire appel à différents mécanismes et actionneurs pour assurer l'ouverture et la fermeture de différentes parties qui composent la tête d'extrusion.

D'autres appareils et méthodes connus par l'homme du métier peuvent être vus dans les documents suivants : JP 2005 254464, A JP S54 58762 A, JP 2000 117813 A, US 4 137 027 A, JP S52 14679 A, DE 30 10 691 A1. Le document JP 2005 254464 divulgue par exemple le préambule de la revendication 1 annexée.

Un objectif de l'invention est de remédier aux inconvénients des documents précités et d'apporter une solution originale de conception de la tête d'extrusion permettant d'améliorer l'opération de nettoyage de l'installation en fin d'opération ainsi que les temps qui y sont impartis.

Cet objectif est atteint par l'invention, selon les revendications indépendantes annexées, qui propose une installation pour fabriquer une bande de profilé à base de plusieurs mélanges d'élastomères de compositions différentes par coextrusion, comportant au moins deux extrudeuses d'alimentation en mélanges d'élastomères d'une tête d'extrusion, caractérisée en ce la filière d'extrusion est montée mobile solidairement de la tête d'extrusion par rapport au support, de sorte que les extrudeuses débitent directement dans ladite tête d'extrusion et que ladite tête d'extrusion forme un ensemble unitaire interchangeable qui regroupe l'intégralité de l'outillage dimensionnel qui est formé par les canaux de transfertet la filière d'extrusion.

Par outillage dimensionnel on comprend l'outillage qui donne la forme et les dimensions au profilé à partir des orifices de sortie des extrudeuses. Cet outillage dimensionnel est formé généralement par les canaux de transfert entre la sortie de chaque extrudeuse et l'entrée dans la filière d'extrusion, ainsi que cette dernière. Par canal de transfert, on comprend un conduit qui relie l'orifice de sortie d'une extrudeuse et l'entrée dans une filière d'extrusion. La tête d'extrusion amovible de l'invention comprend donc toute la partie dimensionnelle de l'outillage qui est spécifique à un produit profilé coextrudé.

Autrement dit la tête d'extrusion est reliée directement aux extrudeuses sans qu'il y ait de canal de transfert de mélange d'élastomère entre les deux, les canaux de transfert entre l'extrémité de la vis de l'extrudeuse et la sortie vers la filière étant contenus complètement dans la tête d'extrusion amovible. La tête d'extrusion selon l'invention regroupe ainsi l'intégralité de l'outillage dimensionnel (canaux de transfert et filière d'extrusion) propre à un profilé donné en un seul bloc. En cas de changement de produit profilé, un tel bloc interchangeable ou amovible est rapidement évacué et remplacé par un autre adapté au nouveau produit.

Ainsi, en fin d'opération d'extrusion lorsque l'on souhaite changer de produit profilé coextrudé, on retire la tête d'extrusion et on la remplace par une autre tête d'extrusion propre au nouveau produit profilé. Les extrudeuses sont vidées ayant débité chacune la totalité du mélange lors de l'opération précédente, et la nouvelle tête d'extrusion étant en place, on peut commencer sans attendre une nouvelle opération de coextrusion. On évite ainsi le nettoyage fastidieux des canaux de transfert ou l'apparition des chutes mixtes comme dans les installations de l'état de la technique. De ce fait, on gagne en productivité et on réduit les coûts.

De préférence, l'extrémité de la vis de chaque extrudeuse arrive sensiblement au niveau de l'orifice d'entrée correspondant dans la tête d'extrusion. Par sensiblement on comprend au ras de l'orifice d'entrée correspondant dans la tête d'extrusion ou à une distance idéalement très faible de quelques mm ou au moins inférieur au diamètre de l'extrudeuse, et sans réduction sensible de la section de celui-ci. Cela permet de supprimer tout résidu de mélange restant entre les deux et ainsi d'éliminer des chutes de mélanges mixés.

Avantageusement, la tête d'extrusion est un ensemble unitaire en forme de prisme droit. Cela permet d'extraire ou d'introduire un seul bloc dans l'installation.

De préférence, lesdites extrudeuses sont montées sur un support commun comportant un logement de réception de la tête d'extrusion. Cette solution est simple et robuste.

Avantageusement, la tête d'extrusion comporte des parois latérales formant l'interface avec ledit support. Ces parois latérales présentent alors des orifices permettant au mélange d'arriver dans la tête d'extrusion.

De préférence, la tête d'extrusion est mobile en translation par rapport audit support. Cela permet une extraction rapide d'une tête d'extrusion et son remplacement aisé avec une autre.

Avantageusement, la direction de déplacement de la tête d'extrusion est perpendiculaire à l'axe longitudinal d'au moins l'une des extrudeuses.

Dans une variante avantageuse de réalisation de l'invention, au moins l'une des parois latérales est inclinée. Ainsi, lorsque la tête d'extrusion est en fin de course à l'intérieur d support, on obtient une bonne étanchéité entre la tête d'extrusion et le support.

Avantageusement, l'installation comprend des moyens de fixation rapide de la tête d'extrusion sur ledit support. Cela permet de verrouiller et de déverrouiller rapidement la tête d'extrusion par rapport au support.

Dans une autre variante avantageuse de réalisation de l'invention, ledit support comporte au moins une paroi latérale mobile en translation dans une direction perpendiculaire à celle de déplacement de la tête d'extrusion. Ainsi, lorsque la paroi mobile est au contact de la paroi latérale en vis-à-vis de la tête d'extrusion, on obtient une bonne étanchéité entre la tête d'extrusion et le support.

Avantageusement, la tête d'extrusion comprend un ensemble de plusieurs plaques disposées côte-à-côte, chaque plaque comportant au moins une cavité permettant de canaliser le mélange en provenance d'une extrudeuse vers un orifice de sortie et agencées sensiblement transversalement à la direction de sortie du flux de mélange desdites extrudeuses.

Par plaque agencée sensiblement transversalement à la direction du flux, on comprend que la plaque est agencée de manière à faire face au flux de mélange et à changer brusquement l'orientation de celui-ci d'un angle égal à celui de son agencement. Un tel angle est d'environ 90° avec une tolérance de 20°. De préférence, un tel angle est compris entre 70 et 110°. L'évacuation à environ 90° de l'extrudat en sortie de la vis de l'extrudeuse permet d'obtenir une certaine continuité de la section d'écoulement des chenaux de la vis jusqu'aux canaux de la tête d'extrusion et la filière. On arrive ainsi à un ratio gonflement/perte de charge qui est donc bien meilleur que dans les solutions de l'état de la technique.

De préférence, au moins une plaque comporte un orifice traversant permettant de relier l'orifice de sortie d'une extrudeuse à la cavité d'une plaque adjacente.

Cela permet le passage d'un mélange d'élastomères en provenance d'une extrudeuse à travers un orifice de la première plaque jusque dans le canal de transfert d'une plaque adjacente. Ainsi, avec un jeu de plaques et d'orifices appropriés on peut changer l'ordre d'arrivée des mélanges dans la tête d'extrusion et on organise leur transfert vers la sortie via la filière d'extrusion, tout en conservant la disposition initiale des extrudeuses.

Le but de l'invention est également atteint avec un procédé de fabrication de bande de profilé à base de plusieurs mélanges d'élastomères de composition différente par coextrusion à l'aide d'au moins deux extrudeuses d'alimentation en mélanges d'élastomères d'une tête d'extrusion, dans lequel :
- on choisit une tête d'extrusion adaptée au profilé à coextruder et on l'introduit dans un support prévu à cet effet dans l'installation de manière à ce qu'elle arrive au niveau des orifices de sortie des extrudeuses, les canaux de transfert entre l'extrémité de la vis de chaque extrudeuse et la filière d'extrusion se trouvant dans la tête d'extrusion interchangeable ;
- on la verrouille en place à l'aide des moyens de fixation rapide ;
- on réalise la coextrusion de la bande de produit ;
- on retire la tête d'extrusion.

De préférence, le procédé de l'invention comprend une étape supplémentaire lorsque laquelle on préchauffe la tête d'extrusion avant son introduction dans l'installation. Cela permet à la tête d'extrusion d'être à la même température que les extrudeuses pour une meilleure productivité de l'installation.

L'invention sera mieux comprise grâce à la suite de la description, qui s'appuie sur les figures suivantes :
- la figure 1 est une vue schématique en coupe transversale de l'installation de l'invention selon un mode de réalisation en position de travail ;
- la figure 2 est une vue schématique en coupe transversale de l'installation selon l'invention en position de repos ;
- la figure 3 est une vue en perspective de l'installation de l'invention selon un autre mode de réalisation en position de repos;
- la figure 4 est une vue à plus petite échelle de l'installation de la figure 3 illustrée en position de travail ;
- la figure 5 est une vue de dessus de l'installation de la figure 3 en position de repos ;
- la figure 6 est une vue de dessus de l'installation de la figure 3 en position de travail ;
- la figure 7 est une vue en coupe transversale de la tête d'extrusion de l'invention selon encore un autre mode de réalisation ;
- la figure 8 est une vue éclatée des composants de la tête d'extrusion de la figure 7.

Sur les différentes figures, les éléments identiques ou similaires portent la même référence. Leur description n'est donc pas systématiquement reprise.

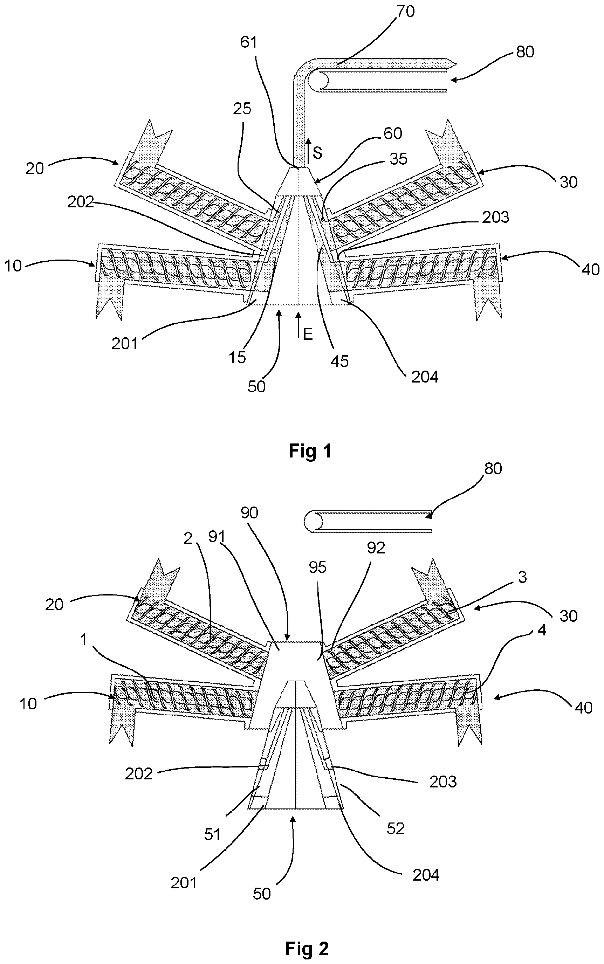

Dans les figures 1 et 2, l'installation d'extrusion 1 comprend quatre extrudeuses 10, 20, 30, 40, une tête d'extrusion 50 et une filière d'extrusion 60. La tête d'extrusion 50 relie les sorties des extrudeuses 10, 20, 30, 40 à une filière d'extrusion 60 qui permet la mise en forme du profilé. La bande de profilé complexe 70 est réalisée par la coextrusion des quatre profilés simples en provenance des différentes extrudeuses qui sont rassemblés au niveau de l'extrémité de sortie 61. La bande de profilé complexe 70 est ensuite acheminée par un dispositif de transport, tel un convoyeur 80.

Tel que généralement connu, les différents mélanges extrudés par les extrudeuses 10, 20, 30 et 40 traversent la tête d'extrusion 50 sans se mixer et sont laminés et mis en forme par la filière 60.

De tels mélanges d'élastomères différents sont, à titre d'exemple les mélanges à base d'élastomères ou de gomme utilisés pour créer un ensemble de bande de roulement tels : un premier matériau en caoutchouc naturel à 100% pour réaliser une sous-couche avec un, puis un deuxième matériau pour réaliser la bande de roulement en caoutchouc synthétique à 100% suivis d'un troisième et quatrième matériau pour réaliser les flancs composé d'un mélange de caoutchouc naturel/ caoutchouc synthétique (20% à 80% de caoutchouc naturel). Par mélanges d'élastomères différents envoyés dans une tête d'extrusion selon l'invention on comprend donc qu'au moins deux mélanges différents arrivent dans la tête en provenance d'au moins deux extrudeuses différentes. Des mélanges identiques, tels un troisième et un quatrième mélange ayant une même composition peuvent aussi être reçus dans la tête d'extrusion en provenance d'autres extrudeuses.

Selon l'invention, les extrudeuses 10, 20, 30, 40 débitent directement dans une tête d'extrusion 50 interchangeable. Ainsi, la tête d'extrusion est reliée directement aux extrudeuses sans qu'il y ait de canal de transfert de mélange d'élastomère entre les deux.

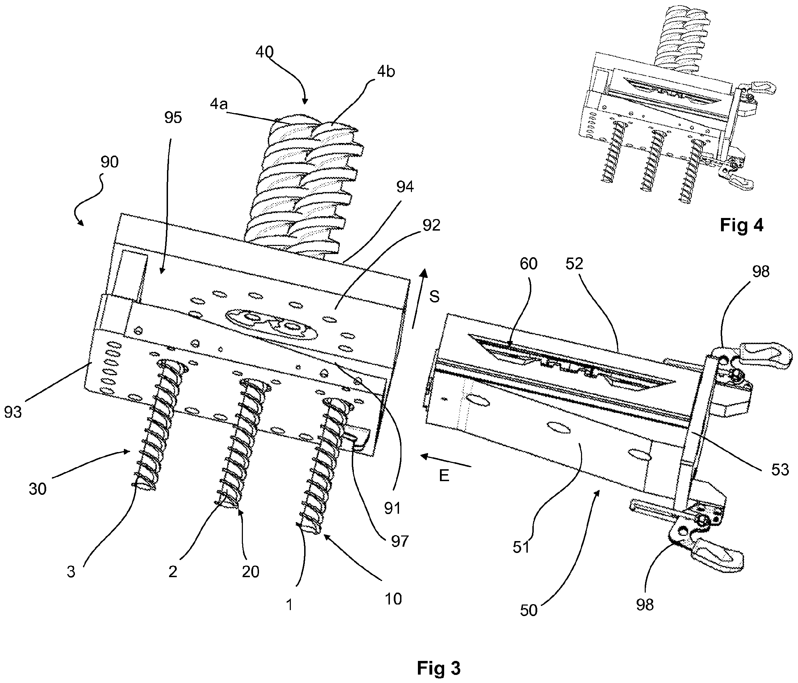

Tel que mieux visible à la figure 3, les extrudeuses 10, 20, 30, 40 sont agencées de part et d'autre d'un support commun 90 et sont fixées à celui-ci. A titre d'exemple, chaque fourreau d'extrudeuse est fixé aux parois latérales 93, 94 du support 90 moyennant un flasque muni des fixations à vis et joints d'étanchéité. Le support 90 est un bloc de forme générale prismatique à l'intérieur duquel se trouve un évidement dont la forme et les dimensions correspondent à celles de la tête d'extrusion 50 et formant un logement 95 pour celle-ci. Plus particulièrement selon l'invention, les extrémités des vis 1, 2, 3 des extrudeuses 10, 20 et 30 arrivent sensiblement au niveau du plan qui constitue l'interface entre la face interne 91 du support 90 et la face externe 51 de la tête d'extrusion 50. Il en est de même pour les extrémités des vis 4a, 4b de l'extrudeuse 40 qui arrivent sensiblement au niveau du plan qui constitue l'interface entre la face interne 92 du support 90 et la face externe 52 de la tête d'extrusion 50. Plus précisément, les extrémités des vis arrivent à l'entrée des ouvertures traversantes qui sont pratiquées dans les parois latérales 93, 94 du support 90 pour permettre le passage des mélanges en provenance des orifices de sortie des extrudeuses vers les orifices d'entrée à l'intérieur de la tête d'extrusion 50. La direction de déplacement de la tête d'extrusion 50 par rapport au support 90, indiquée par la flèche E sur la figure 1, est parallèle à celle de sortie du produit profilé via la filière d'extrusion 60, indiquée par la flèche S sur la même figure. La filière d'extrusion 60 est solidaire de la tête d'extrusion 50 et est montée mobile avec cette dernière par rapport au support 90 de l'installation.

Ainsi, en fin d'opération d'extrusion lorsque l'on souhaite changer de produit profilé coextrudé, on éloigne la tête d'extrusion 50 du support 90 et on la remplace avec une autre tête d'extrusion propre au nouveau produit profilé. Les extrudeuses 10, 20, 30, 40 sont vidées ayant débité chacune la totalité du mélange lors de l'opération précédente, et la nouvelle tête d'extrusion étant en place, on peut commencer sans attendre une nouvelle opération de coextrusion.

Une installation comprenant une tête d'extrusion de l'invention permet ainsi de faciliter le changement de produit profilé à fabriquer, la machine étant propre en fin d'opération, on n'a donc plus besoin de vider les canaux de transfert qui composent les installations de l'état de la technique.

Selon l'invention, la tête d'extrusion 50 est un ensemble unitaire ou bloc que l'on introduit à l'intérieur du support 90 et l'on extrait de ce dernier par un mouvement de translation dans une direction de déplacement préétablie. La filière d'extrusion 60 complète l'ensemble formant tête d'extrusion 50. Dans le mode de réalisation illustré à la figure 3, la direction de déplacement en translation de la tête d'extrusion 50 est perpendiculaire aux axes longitudinaux des extrudeuses 10 et 40. On peut ainsi utiliser, pour plus de facilité, un bras robotisé qui saisit la tête d'extrusion 50 et la déplace par rapport au support 90 en vue de son remplacement par une nouvelle tête. La direction de déplacement de la tête d'extrusion 50 par rapport au support 90, indiquée par la flèche E sur la figure 1, est perpendiculaire à celle de sortie du produit profilé, indiquée par la flèche S sur la même figure.

Selon un aspect important de l'invention, au moins l'une des parois latérales 51 et 52 de la tête d'extrusion 50 et au moins l'une des parois internes 91 et 92 du support 90 sont inclinées et font un même angle par rapport à un plan parallèle au plan contenant l'axe de déplacement de la tête d'extrusion 50. De préférence, un tel angle d'inclinaison est faible de façon à limiter les efforts de verrouillage en place de la tête d'extrusion, il est de préférence inférieur à 30°. Pour des angles inférieurs à 15° environ (selon le coefficient de frottement du contact qui dépend du matériau des pièces en contact), le coincement mécanique peut participer au maintien de l'outillage. Toutefois, on évite de descendre en deçà de 3° car le positionnement de la tête d'extrusion est plus difficile à maitriser (en ce qui concerne la mise en correspondance du cylindre de la vis avec l'orifice passant de la tête d'extrusion). Dans un mode préféré, on choisit une inclinaison de 6°.

Dans le mode représenté aux figures 3 à 6, de manière à simplifier la construction, seulement la paroi 51 de la tête d'extrusion et la paroi correspondante 91 du support sont inclinées, les autres parois étant, elles, parallèles à la direction de déplacement de la tête d'extrusion. Cette construction à parois inclinées permet d'assurer l'étanchéité entre les parois internes du support et celles externes de la tête d'extrusion lors du mouvement d'introduction de celle-ci dans son logement au sein du support. Lorsque la tête d'extrusion est arrivée dans sa position de fonctionnement à l'intérieur du support 90, elle est verrouillée en position à l'aide des moyens de fixation rapide 99, par exemple en utilisant des brides 98 de fixation à genouillère agencées entre chaque bord latéral de la paroi frontale 53 de la tête d'extrusion 50 venant en prise avec des crochets 97 fixés aux parois latérales 93 et 94 du support 90.

Dans une variante de réalisation, non visible sur les figures, au moins l'une des parois latérales 93, 94 du support 90 est mobile en translation, en étant solidaire de la partie mobile d'un actionneur, par exemple la tige d'un vérin, dans une direction perpendiculaire à celle de déplacement de la tête d'extrusion 50 lors de son introduction à l'intérieur du support. Ainsi, une fois la tête d'extrusion installée à l'intérieur du support, on approche l'une et/ou l'autre des parois latérales du support pour assurer l'étanchéité entre le support et la tête d'extrusion.

Les extrudeuses qui alimentent la tête d'extrusion sont des extrudeuses mono-vis ou bi-vis de type connu qui comportent donc une ou deux vis sans fin entraînées en rotation par un moteur à l'intérieur d'un fourreau. De préférence au moins l'une des extrudeuses bi-vis est une extrudeuse volumétrique du type pompe bi-vis comportant deux vis contrarotatives à filets interpénétrés et profils conjugués entraînées en rotation par des moteurs, dans des sens contraires, à l'intérieur d'un fourreau. Dans un mode préféré de réalisation de l'invention toutes les extrudeuses 10, 20, 30, 40 sont des extrudeuses bi-vis volumétriques qui assurent un débit constant pour permettre une bonne précision du profilé obtenu par coextrusion.

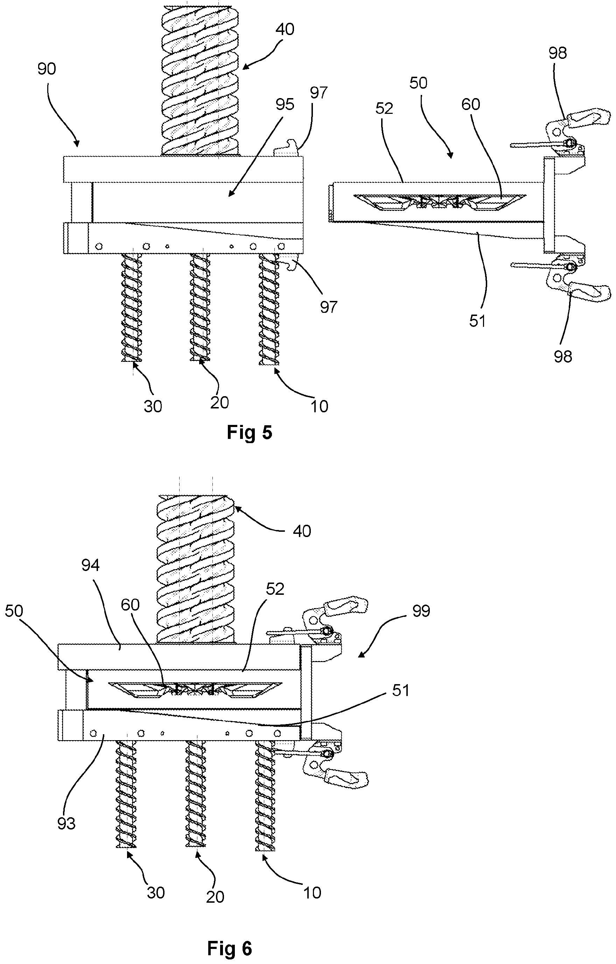

Les figures 5 et 6 illustrent par des vues de dessus l'installation de la figure 3. La tête d'extrusion 50 est en train d'être introduite dans le logement 95 du support 90 à la figure 5 et elle est en place à l'intérieur du support 90 à la figure 6.

Avantageusement dans les modes de réalisation illustrés aux figures 3 à 8, la tête d'extrusion 50 comprend un ensemble formé par un empilage de plaques planes parallèles et perpendiculaires à l'axe longitudinal des extrudeuses 10, 20, 30, 40 et donc à la direction d'alimentation en flux de mélange d'élastomères. Les mélanges arrivent ainsi par des canaux séparés dans la filière d'extrusion 60 où ils forment le profil coextrudé.

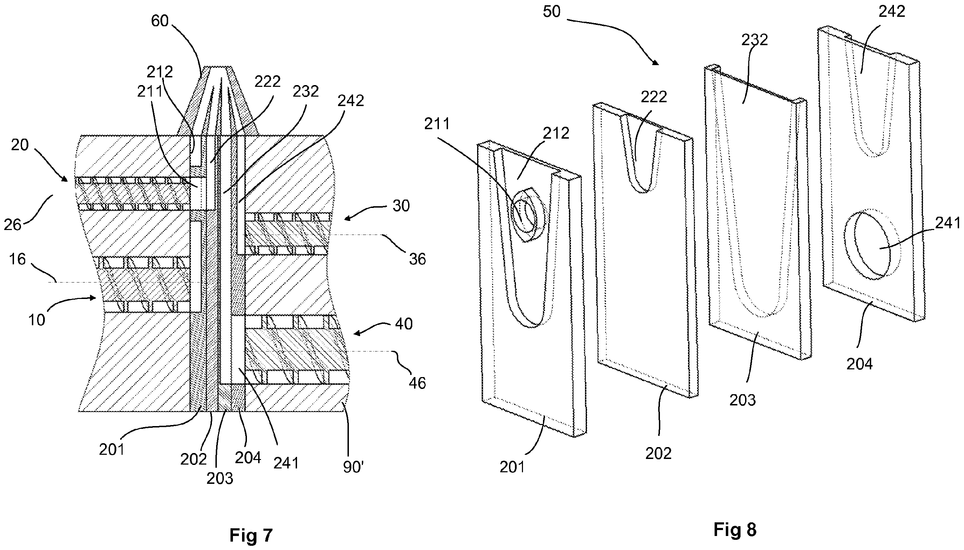

Les figures 7 et 8 illustrent, de manière simplifiée, un autre mode de réalisation de la tête d'extrusion 50 comportant un tel empilage de plaques. Pour plus de clarté, les parois latérales formant support de la tête d'extrusion ont été omises sur les figures 7 et 8. La tête d'extrusion 50 comprend un empilage de quatre plaques planes parallèles entre elles et s'étendant dans des plans perpendiculaires aux axes longitudinaux 16, 26, 36, 46 des extrudeuses 10, 20, 30, 40 et munies de canaux de transfert de mélange le long des plaques en direction d'une filière de sortie. Un tel agencement permet de réduire la longueur des canaux de transfert entre les extrémités de sortie des extrudeuses et la filière d'extrusion et de diminuer ainsi la perte de charge subie par le mélange extrudé.

Dans l'exemple illustré aux figures 7 et 8, la première plaque 201 comprend une cavité 212 creusée dans l'épaisseur de la paroi de la plaque, la cavité 212 ayant une forme évasée vers le haut en direction de la filière d'extrusion à partir d'une base de forme circulaire de diamètre égal au diamètre de l'orifice de sortie du fourreau de l'extrudeuse 10. La cavité 212 forme ainsi un premier canal de transfert de mélange en provenance de l'extrudeuse 10. La première plaque 201 comprend également un orifice traversant 211 qui communique avec la deuxième extrudeuse 20 pour transférer le mélange débité par celle-ci au canal de transfert pratiqué dans la deuxième plaque 202.

La deuxième plaque 202 comprend une cavité 222 creusée dans l'épaisseur de la paroi de la plaque, la cavité 212 ayant une forme évasée vers le haut en direction de la filière d'extrusion à partir d'une base de forme circulaire de diamètre égal au diamètre de l'orifice de sortie du fourreau de l'extrudeuse 20 et à celui de l'orifice 211. La cavité 222 forme ainsi un deuxième canal de transfert de mélange en provenance de l'extrudeuse 20.

La quatrième plaque 204 comprend une cavité 242 creusée dans l'épaisseur de la paroi de la plaque, la cavité 242 ayant une forme évasée vers le haut en direction de la filière d'extrusion à partir d'une base de forme circulaire de diamètre égal au diamètre de l'orifice de sortie du fourreau de l'extrudeuse 30. La cavité 242 forme ainsi un quatrième canal de transfert de mélange en provenance de l'extrudeuse 30. La quatrième plaque 204 comprend également un orifice traversant 241 qui communique avec la sortie de la quatrième extrudeuse 40 pour transférer le mélange débité par celle-ci dans le canal de transfert pratiqué dans une troisième plaque 203.

La troisième plaque 203 comprend une cavité 232 creusée dans l'épaisseur de la paroi de la plaque, la cavité 232 ayant une forme évasée vers le haut en direction de la filière d'extrusion à partir d'une base de forme circulaire de diamètre égal au diamètre de l'orifice de sortie du fourreau de l'extrudeuse 40 et de l'orifice traversant 241. La cavité 232 forme ainsi un troisième canal de transfert de mélange en provenance de l'extrudeuse 40.

Bien entendu, comme dans l'exemple des figures 3 à 6, les plaques 201, 202, 203, 204 sont tenues ensemble par des parois latérales 51, 52 et une entretoise 53 de manière à former une tête d'extrusion sous forme de bloc ou ensemble unitaire. Une telle tête d'extrusion est appliquée de manière étanche à la sortie des extrudeuses 10, 20, 30, 40. Dans une variante avantageuse de l'invention, le support 90 est en deux parties, au moins l'une 90' étant mobile axialement afin de prendre en étau la tête d'extrusion 50 et appliquer les orifices de sortie des extrudeuses de manière étanche sur les faces correspondantes en vis-à-vis de la tête d'extrusion 50.

Une telle tête d'extrusion réalisée sous forme de plaques interchangeables permet, par un agencement judicieux d'orifices traversants et de canaux de transfert entre les différentes plaques de conserver la disposition initiale des extrudeuses et de ne changer que les plaques de la tête d'extrusion.

En effet, dans les machines de coextrusion de l'état de la technique, l'ordre d'empilage des bandes extrudées doit suivre l'ordre d'agencement des extrudeuses dans l'installation. Ceci car chaque voie de sortie d'extrudeuse débouche dans des couloirs de transfert supportés par des éléments qui font partie intégrante de la machine. Leur changement implique des opérations de démontage très fastidieuses. De ce fait, on préfère garder la configuration initiale de la machine et adapter le régime de l'extrudeuse au nouveau profilé. Une telle nouvelle mise en régime de l'extrudeuse est très consommatrice de temps.

Or, avec la solution de l'invention, on regroupe toutes les parties dimensionnelles de la machine dans un bloc extractible. Un tel bloc est de surcroît réalisé à l'aide de plaques planes parallèles entre elles et perpendiculaires à la direction de sortie du flux de mélange et munies d'ouvertures et de canaux de transfert permettant d'inverser l'ordre d'arrivée des mélanges dans la filière d'extrusion. Cette solution permet à l'installation d'être très flexible, en s'adaptant à une grande diversité de profilés coextrudés, même des plus complexes, tout en réduisant les temps d'attente et de préparation de l'installation ou de ses composants.

En fonctionnement, on commence par choisir une tête d'extrusion appropriée adaptée au profilé à réaliser par coextrusion. Une telle tête d'extrusion 50 est de préférence réalisée en préalable en empilant des plaques parallèles entre elles 201, 202, 203, 204 et parallèles aux facs internes des parois latérales 51, 52 de la tête d'extrusion et en les fixant ensemble par exemple moyennant une fixation à vis. La tête d'extrusion est placée dans un four pour la réchauffer et l'amener à la température de fonctionnement de l'installation.

La tête d'extrusion est ensuite saisie par exemple par un bras robotisé (non visible sur les dessins) et introduite dans le logement 95 du support 90 de l'installation, tel qu'illustré à la figure 4. On continue d'introduire la tête d'extrusion jusqu'à ce qu'elle soit bloquée axialement de par l'inclinaison de ses parois latérales. A ce moment, les orifices d'entrées dans la tête d'extrusion et celles de sortie des extrudeuses communiquent de manière étanche et on peut démarrer l'opération d'extrusion.

On peut agencer plus de quatre extrudeuses agencées de part et d'autre de la tête d'extrusion, voire même sur les autres faces de la tête d'extrusion qui ne sont pas dédiées l'une à la sortie des mélanges en direction de la filière d'extrusion et l'autre à la préhension de la tête en vue de son déplacement au moins deux d'entre elles travaillant avec des mélanges différents et certaines d'autres avec un même mélange d'élastomères

## Revendications

1. Installation (1) pour fabriquer une bande de profilé à base de plusieurs mélanges d'élastomères de compositions différentes par coextrusion, ladite installation comportant un support (90), au moins deux extrudeuses (10, 20, 30, 40) fixées au support (90) et servant à l'alimentation en mélanges d'élastomères d'une tête d'extrusion (50) qui comprend une filière d'extrusion (60) permettant la mise en forme du profilé ainsi que des canaux de transfert (212, 222, 232, 242) afin de relier les sorties des extrudeuses (10, 20, 30, 40) à la filière d'extrusion (60), ladite installation (1) étant **caractérisée en ce que** la filière d'extrusion (60) est montée mobile solidairement de la tête d'extrusion (50) par rapport au support (90), de sorte que les extrudeuses (10, 20, 30, 40) débitent directement dans ladite tête d'extrusion (50) et que ladite tête d'extrusion (50) forme un ensemble unitaire interchangeable qui regroupe l'intégralité de l'outillage dimensionnel qui est formé par les canaux de transfert (212, 222, 232, 242) et la filière d'extrusion (60).

2. Installation selon la revendication 1, **caractérisée en ce que** l'extrémité de la vis de chaque extrudeuse arrive sensiblement au niveau de l'orifice d'entrée correspondant dans la tête d'extrusion.

3. Installation selon l'une des revendications précédentes, **caractérisée en ce que** la tête d'extrusion (50) est un ensemble unitaire en forme de prisme droit.

4. Installation selon l'une des revendications précédentes, **caractérisée en ce que** lesdites extrudeuses (10, 20, 30, 40) sont montées sur un support (90) commun comportant un logement de réception de la tête d'extrusion.

5. Installation selon la revendication 4, **caractérisée en ce que** la tête d'extrusion (50) comporte des parois latérales (51, 52) formant l'interface avec ledit support.

6. Installation selon l'une des revendications 4 ou 5, **caractérisée en ce que** la tête d'extrusion (50) est mobile en translation par rapport audit support (90).

7. Installation selon la revendication 6, **caractérisée en ce que** la direction de déplacement de la tête d'extrusion (50) est perpendiculaire à l'axe longitudinal d'au moins l'une des extrudeuses (10, 20, 30, 40).

8. Installation selon l'une des revendications 5 à 7, **caractérisée en ce qu'**au moins l'une des parois latérales (51, 52) est inclinée.

9. Installation selon l'une des revendications 4 à 8, **caractérisée en ce qu'**elle comprend des moyens de fixation rapide de la tête d'extrusion (50) sur ledit support (90).

10. Installation selon l'une des revendications 4 à 7, **caractérisée en ce que** ledit support (90) comporte au moins une paroi latérale (90') mobile en translation dans une direction perpendiculaire à celle de déplacement de la tête d'extrusion (50).

11. Installation selon l'une des revendications précédentes, **caractérisée en ce que** la tête d'extrusion (50) comprend un ensemble de plusieurs plaques (201, 202, 203, 204) disposées côte-à-côte, chaque plaque comportant au moins une cavité permettant de canaliser le mélange en provenance d'une extrudeuse (10, 20, 30, 40) vers un orifice de sortie et agencées sensiblement transversalement à la direction de sortie du flux de mélange desdites extrudeuses.

12. Installation selon la revendication 11, **caractérisée en ce qu'**au moins une plaque (201, 204) comporte un orifice traversant (211, 241) permettant de relier l'orifice de sortie d'une extrudeuse (10, 40) à la cavité d'une plaque adjacente (202, 203).

13. Procédé de fabrication de bande de profilé à base de plusieurs mélanges d'élastomères de composition différente par coextrusion à l'aide d'au moins deux extrudeuses (10, 20, 30, 40) d'alimentation en mélanges d'élastomères d'une tête d'extrusion (50) interchangeable, **caractérisé en ce que** :
- on choisit une tête d'extrusion (50) adaptée au profilé à coextruder et on l'introduit dans un support prévu à cet effet dans l'installation de manière à ce qu'elle arrive au niveau des orifices de sortie des extrudeuses, les canaux de transfert (212, 222, 232, 242) entre l'extrémité de la vis de chaque extrudeuse et la filière d'extrusion (60) se trouvant dans la tête d'extrusion interchangeable;
- on la verrouille en place à l'aide des moyens de fixation rapide ;
- on réalise la coextrusion de la bande de produit ;
- on retire la tête d'extrusion (50).

14. Procédé selon la revendication 13, **caractérisé en ce qu'**on préchauffe la tête d'extrusion (50) avant son introduction dans l'installation.

## Patentansprüche

1. Anlage (1) zur Herstellung eines Profilstreifens auf der Basis von mehreren Elastomermischungen mit unterschiedlichen Zusammensetzungen durch Coextrusion, wobei die Anlage einen Ständer (90), mindestens zwei Extruder (10, 20, 30, 40), die an dem Ständer (90) befestigt sind und zum Zuführen von Elastomermischungen zu einem Extrusionskopf (50) dienen, der eine Extrusionsdüse (60) umfasst, die das Formen des Profils ermöglicht, sowie Förderkanäle (212, 222, 232, 242), um die Auslässe der Extruder (10, 20, 30, 40) mit der Extrusionsdüse (60) zu verbinden, aufweist, wobei die Anlage (1) **dadurch gekennzeichnet ist, dass** die Extrusionsdüse (60) mit dem Extrusionskopf (50) fest verbunden in Bezug auf den Ständer (90) beweglich montiert ist, so dass die Extruder (10, 20, 30, 40) direkt in den Extrusionskopf (50) fördern, und dass der Extrusionskopf (50) eine austauschbare einheitliche Anordnung bildet, die die Gesamtheit des dimensionalen Werkzeugs zusammenfasst, das durch die Förderkanäle (212, 222, 232, 242) und die Extrusionsdüse (60) gebildet wird.

2. Anlage nach Anspruch 1, **dadurch gekennzeichnet, dass** das Ende der Schnecke jedes Extruders im Wesentlichen auf Höhe der entsprechenden Eintrittsöffnung im Extrusionskopf ankommt.

3. Anlage nach einem der vorhergehenden Ansprüche, **dadurch gekennzeichnet, dass** der Extrusionskopf (50) eine einheitliche Anordnung in Form eines gerade Prismas ist.

4. Anlage nach einem der vorhergehenden Ansprüche, **dadurch gekennzeichnet, dass** die Extruder (10, 20, 30, 40) an einem gemeinsamen Ständer (90) montiert sind, der eine Aufnahme zum Aufnehmen des Extrusionskopfes beinhaltet.

5. Anlage nach Anspruch 4, **dadurch gekennzeichnet, dass** der Extrusionskopf (50) Seitenwände (51, 52) aufweist, die die Schnittstelle zu dem Ständer bilden.

6. Anlage nach einem der Ansprüche 4 oder 5, **dadurch gekennzeichnet, dass** der Extrusionskopf (50) in Bezug auf den Ständer (90) translatorisch beweglich ist.

7. Anlage nach Anspruch 6, **dadurch gekennzeichnet, dass** die Verlagerungsrichtung des Extrusionskopfes (50) senkrecht zur Längsachse mindestens eines der Extruder (10, 20, 30, 40) verläuft.

8. Anlage nach einem der Ansprüche 5 bis 7, **dadurch gekennzeichnet, dass** mindestens eine der Seitenwände (51, 52) geneigt ist.

9. Anlage nach einem der Ansprüche 4 bis 8, **dadurch gekennzeichnet, dass** sie Schnellbefestigungsmittel zum schnellen Befestigen des Extrusionskopfes (50) an dem Ständer (90) umfasst.

10. Anlage nach einem der Ansprüche 4 bis 7, **dadurch gekennzeichnet, dass** der Ständer (90) mindestens eine Seitenwand (90') beinhaltet, die in eine senkrecht zur Verlagerungsrichtung des Extrusionskopfes (50) verlaufende Richtung translatorisch beweglich ist.

11. Anlage nach einem der vorhergehenden Ansprüche, **dadurch gekennzeichnet, dass** der Extrusionskopf (50) eine Anordnung aus mehreren Platten (201, 202, 203, 204) umfasst, die nebeneinander angeordnet sind, wobei jede Platte mindestens einen Hohlraum aufweist, der es ermöglicht, die von einem Extruder (10, 20, 30, 40) kommende Mischung zu einer Austrittsöffnung zu kanalisieren, und die im Wesentlichen quer zur Austrittsrichtung des Mischungsstroms der Extruder eingerichtet sind.

12. Anlage nach Anspruch 11, **dadurch gekennzeichnet, dass** mindestens eine Platte (201, 204) eine durchgehende Öffnung (211, 241) aufweist, die es ermöglicht, die Austrittsöffnung eines Extruders (10, 40) mit dem Hohlraum einer benachbarten Platte (202, 203) zu verbinden.

13. Verfahren zur Herstellung von Profilstreifen auf der Basis von mehreren Elastomermischungen mit unterschiedlichen Zusammensetzungen durch Coextrusion mithilfe von mindestens zwei Extrudern (10, 20, 30, 40) zum Zuführen von Elastomermischungen zu einem austauschbaren Extrusionskopf (50), **dadurch gekennzeichnet, dass**:
- ein Extrusionskopf (50), der für das zu coextrudierende Profil geeignet ist, ausgewählt wird und in einen hier in der Anlage vorgesehenen Ständer eingeführt wird, so dass er auf Höhe der Austrittsöffnungen der Extruder ankommt, wobei sich die Förderkanäle (212, 222, 232, 242) zwischen dem Ende der Schnecke jedes Extruders und der Extrusionsdüse (60) in dem austauschbaren Extrusionskopf befinden;
- er vor Ort mithilfe der Schnellbefestigungsmittel verriegelt wird;
- die Coextrusion des Produktstreifens ausgeführt wird;
- der Extrusionskopf (50) entnommen wird.

14. Verfahren nach Anspruch 13, **dadurch gekennzeichnet, dass** der Extrusionskopf (50) vor seinem Einführen in die Anlage vorgewärmt wird.

## Claims

1. Facility (1) for manufacturing a profile strip made from several elastomer mixtures with different compositions by coextrusion, said facility comprising a support (90), at least two extruders (10, 20, 30, 40) fastened to the support (90) and serving to feed elastomer mixtures to an extrusion head (50) which comprises an extrusion die (60) that enables the forming of the profiled element, and also transfer channels (212, 222, 232, 242) in order to connect the outlets of the extruders (10, 20, 30, 40) to the extrusion die (60), said facility (1) being **characterized in that** the extrusion die (60) is mounted movably as one with the extrusion head (50) with respect to the support (90), such that the extruders (10, 20, 30, 40) discharge directly into said extrusion head (50) and such that said extrusion head (50) forms an interchangeable single assembly which groups together all of the dimensional tooling which is formed by the transfer channels (212, 222, 232, 242) and the extrusion die (60).

2. Facility according to Claim 1, **characterized in that** the end of the screw of each extruder arrives substantially level with the corresponding inlet orifice to the extrusion head.

3. Facility according to one of the previous claims, **characterized in that** the extrusion head (50) is a single assembly in the form of a right prism.

4. Facility according to one of the previous claims, **characterized in that** said extruders (10, 20, 30, 40) are mounted on a common support (90), comprising a housing for receiving the extrusion head.

5. Facility according to Claim 4, **characterized in that** the extrusion head (50) comprises side walls (51, 52) forming the interface with said support.

6. Facility according to one of Claims 4 or 5, **characterized in that** the extrusion head (50) is translatably mobile relative to said support (90).

7. Facility according to Claim 6, **characterized in that** the direction of movement of the extrusion head (50) is perpendicular to the longitudinal axis of at least one of the extruders (10, 20, 30, 40).

8. Facility according to one of Claims 5 to 7, **characterized in that** at least one of the side walls (51, 52) is inclined.

9. Facility according to one of Claims 4 to 8, **characterized in that** it comprises means for quickly fastening the extrusion head (50) to said support (90).

10. Facility according to one of Claims 4 to 7, **characterized in that** said support (90) comprises at least one side wall (90') that is translatably mobile in a direction perpendicular to the direction of movement of the extrusion head (50).

11. Facility according to one of the previous claims, **characterized in that** the extrusion head (50) comprises a set of several plates (201, 202, 203, 204) arranged side by side, each plate comprising at least one cavity making it possible to channel the mixture coming from an extruder (10, 20, 30, 40) towards an outlet orifice and arranged substantially transverse to the output direction of the flow of mixture from said extruders.

12. Facility according to Claim 11, **characterized in that** at least one plate (201, 204) comprises a through-orifice (211, 241) making it possible to connect the outlet orifice of an extruder (10, 40) to the cavity of an adjacent plate (202, 203).

13. Method for manufacturing a profile strip made from several elastomer mixtures with different compositions by coextrusion using at least two extruders (10, 20, 30, 40) feeding elastomer mixtures to an interchangeable extrusion head (50), **characterized in that**:
- an extrusion head (50) suited to the profiled element to be coextruded is selected and inserted into a support provided to this end in the facility so that it arrives level with the outlet orifices of the extruders, the transfer channels (212, 222, 232, 242) between the end of the screw of extruder and the extrusion die (60) being located in the interchangeable extrusion head;
- it is locked in place using quick fastening means;
- the strip of product is coextruded;
- the extrusion head (50) is removed.

14. Method according to Claim 13, **characterized in that** the extrusion head (50) is preheated before it is inserted into the facility.
